# FASCICULE DE BREVET EUROPEEN

(11) **EP 3 184 871 B1**
(45) Date de publication et mention de la délivrance du brevet: **26.09.2018**
(21) Numéro de dépôt: 16206089.1
(22) Date de dépôt: 22.12.2016
(51) Int. Cl.: F16L 37/34, F16L 37/35, F16L 37/23

(54) **ELÉMENT MÂLE OU FEMELLE DE RACCORD RAPIDE ET RACCORD RAPIDE COMPRENANT UN TEL ÉLÉMENT**
STECKANSCHLUSSELEMENT ODER BUCHSE EINES SCHNELLANSCHLUSSES, UND EIN SOLCHES ELEMENT UMFASSENDER SCHNELLANSCHLUSS
MALE OR FEMALE QUICK CONNECTION ELEMENT AND QUICK CONNECTION INCLUDING SUCH AN ELEMENT

(30) Priorité: 23.12.2015 FR 1563259
(43) Date de publication de la demande: 28.06.2017
(73) Titulaire: Staubli Faverges, 74210 Faverges (FR)
(72) Inventeur: TIBERGHIEN, Alain-Christophe, 74320 Sevrier (FR); DURIEUX, Christophe, 73200 Gilly sur Isere (FR); MAYER, Romain, 73400 Hery sur Ugine (FR)
(74) Mandataire: Lavoix

(56) Documents cités:
- EP-A1- 2 669 560
- WO-A1-2014/060433
- DE-U1- 20 205 441
- FR-A1- 2 657 138
- US-A1- 2004 144 436
- US-B1- 6 394 131

## Description

L'invention concerne un élément mâle ou femelle de raccord rapide, ainsi qu'un raccord rapide comprenant un tel élément.

L'invention concerne plus particulièrement les raccords rapides utilisés pour raccorder des canalisations de fluide sous pression. Avec un raccord rapide, lors du raccordement de deux canalisations de fluide sous pression, un élément mâle et un élément femelle sont emmanchés l'un dans l'autre pour créer une veine de circulation de fluide sous pression. Ce raccordement nécessite de repousser des clapets de soupape qui, dans ce cas, appartiennent à chacun des éléments mâle et femelle du raccord. Ces clapets sont soumis à la pression interne de chaque élément de raccord, laquelle pression peut être importante et amenée à augmenter dans son environnement, au point de gêner la manoeuvre de raccordement, dans la mesure où l'opérateur peut éprouver des difficultés à vaincre l'effort résistant exercé, par la pression du fluide à l'intérieur des éléments de raccord, contre les clapets. Par exemple, pour un raccord dont le clapet présente un diamètre extérieur de 5 mm, l'effort à exercer pour connecter les éléments mâle et femelle du raccord dont l'un est raccordé à une canalisation à 160 bars est de l'ordre de 330 newtons (N).

Pour pallier cette difficulté, il est connu, par exemple de FR-A-2 657 138 de ménager un canal de purge qui est ouvert, lors du raccordement des éléments mâle et femelle du raccord, grâce à un organe actionné à partir de la face avant de l'élément de raccord. Ceci permet l'échappement d'une partie du fluide présent dans le raccord et l'équilibrage de la pression du fluide à l'intérieur du raccord par rapport à la pression ambiante. Ceci facilite le recul des clapets de soupape mobiles et rend plus aisée la manipulation que doit effectuer l'opérateur.

Toutefois, le système de FR-A-2 657 138 repose sur l'incorporation, au sein d'une partie centrale d'un raccord, d'un clapet anti-retour formé par une bille en appui sur un siège d'étanchéité. Un tel clapet anti-retour est relativement volumineux, ce qui n'est pas compatible avec toutes les tailles de raccord. En particulier, dans certains raccords de faible diamètre, seul un espace réduit est disponible dans la partie centrale de chaque élément mâle ou femelle, ce qui ne permet pas de loger le mécanisme connu. En outre, plus le diamètre du raccord est important, plus les clapets peuvent avoir des surfaces étendues soumises à la pression interne du raccord et plus les efforts résistants à l'emmanchement sont élevés.

Il est également connu de EP-A-2 669 560 de prévoir, au sein d'un élément de raccord, un dispositif de décharge et de purge qui comprend un obturateur mobile à l'encontre de l'action d'un ressort, avec une construction relativement volumineuse.

C'est à ces inconvénients qu'entend plus particulièrement remédier l'invention en proposant une nouvelle structure d'élément mâle ou femelle de raccord rapide, dans laquelle un passage de purge peut être ouvert lors de l'accouplement des éléments mâle et femelle du raccord, sans nécessiter une construction volumineuse.

A cet effet, l'invention concerne un élément mâle ou femelle de raccord rapide destiné à être raccordé à une canalisation de fluide sous pression et comprenant :
- un corps définissant un passage de fluide sous pression, une face avant et un axe longitudinal de l'élément de raccord ;
- une pièce interne disposée dans le corps, qui est pourvue d'une surface appartenant à la face avant, ainsi que d'un passage de purge reliant le passage de fluide sous pression et l'extérieur de l'élément de raccord ; et
- un mécanisme d'ouverture destiné à être actionné depuis la face avant de l'élément de raccord pour ouvrir sélectivement le passage de purge.

Conformément à l'invention, la pièce interne est équipée d'une gorge périphérique dans laquelle repose un joint qui, dans une portion d'obturation, obture le passage de purge. Par ailleurs, le mécanisme d'ouverture est monté sur la pièce interne et comprend au moins un organe de commande de la position du joint par rapport à la gorge, cet organe de commande étant mobile entre une première position inactive, ou il ne déplace pas le joint par rapport à sa position d'obturation, et une deuxième position active, où il agit directement sur le joint pour ouvrir le passage de purge.

Grâce à l'invention, l'activation du mécanisme d'ouverture du canal de purge permet de laisser échapper une quantité de fluide sous pression suffisante pour abaisser la pression résiduelle dans le volume intérieur de l'élément de raccord, au point que la pression exercée sur son clapet peut être aisément vaincue par l'opérateur lors de l'emmanchement des éléments mâle et femelle l'un dans l'autre. La présence du joint dans la gorge de la pièce interne permet de réaliser une section d'étanchéité annulaire au sein du passage de purge. L'organe de commande permet de créer une fuite au niveau de ce joint, lorsqu'il agit sur ce joint, en particulier pour décoller ce joint par rapport au fond de la gorge contre lequel repose par défaut le joint, c'est-à-dire lorsqu'il est dans sa position d'obturation. L'utilisation d'une gorge périphérique et d'un joint permet d'obtenir une bonne compacité du mécanisme d'ouverture du passage de purge et procède d'une approche simple, fiable et économique. Elle nécessite peu de modifications structurelles par rapport à un raccord classique. L'invention s'applique indifféremment à un élément mâle ou femelle de raccord.

Selon des aspects avantageux mais non obligatoires de l'invention, un tel élément de raccord peut incorporer une ou plusieurs des caractéristiques suivantes, prises dans toute combinaison techniquement admissible :
- L'élément de raccord comprend un poussoir fixe par rapport au corps, un clapet mobile par rapport au corps entre une position en appui contre un siège défini en partie par le poussoir et situé du côté de la face avant de l'élément de raccord, où il obture le passage de fluide sous pression, et une position écartée du siège, où il définit avec le siège une section de passage de fluide sous pression, alors que la pièce interne équipée de la gorge périphérique et du joint est formée soit par le clapet soit par le poussoir.
- L'organe de commande est actionné, en passant de sa première position inactive à sa deuxième position active, par un piston disposé dans un premier logement de la pièce interne, mobile dans ce logement parallèlement à l'axe longitudinal et destiné à être lui-même actionné à partir de la face avant.
- L'organe de commande est un pion disposé dans un deuxième logement de la pièce interne et mobile radialement par rapport à l'axe longitudinal, entre sa première position inactive et sa deuxième position active, sous l'action d'une surface de came du piston.
- L'organe de commande est un anneau fendu disposé entre le joint et le fond de la gorge de la pièce interne.
- L'anneau fendu est mobile, entre sa première position inactive et sa deuxième position active, sous l'action d'au moins un pion disposé dans un deuxième logement de la pièce interne et lui-même mobile radialement par rapport à l'axe longitudinal, entre une première position inactive et une deuxième position active, sous l'action d'une surface de came du piston.
- L'organe de commande est un piston disposé dans un premier logement de la pièce interne, mobile dans ce logement et destiné à être lui-même actionné à partir de la face avant.
- Le piston est mobile parallèlement à l'axe longitudinal et définit au moins un espace de dégagement partiel du joint, dans la position inactive du piston.
- L'élément de raccord comprend des moyens de charge élastique du piston vers une position où celui-ci n'actionne pas l'organe mobile et où il peut être actionné à partir de la face avant.
- Le passage de purge comprend au moins le premier logement de la pièce interne.
- La gorge périphérique de la pièce interne est à section trapézoïdale, semi-circulaire ou asymétrique.
- L'élément de raccord comprend un organe de retenue du joint dans la gorge périphérique, notamment une bague solidaire de la pièce interne.
- Le passage de purge débouche sur la face avant de l'élément de raccord.
- L'organe de commande est mobile dans le passage de purge.

Par ailleurs, l'invention concerne un raccord rapide pour la jonction amovible de canalisations de fluide sous pression, ce raccord comprenant un élément mâle et un élément femelle dont l'un au moins est tel que mentionné ci-dessus.

L'invention sera mieux comprise et d'autres avantages de celle-ci apparaîtront plus clairement à la lumière de la description qui va suivre, de six modes de réalisation d'un élément de raccord et d'un raccord conformes à son principe, donnée uniquement à titre d'exemple et faite en référence aux dessins annexés, dans lesquels :
- la figure 1 est une coupe axiale des éléments mâle et femelle d'un raccord rapide conforme à l'invention, ces éléments mâle et femelle étant eux-mêmes conformes à l'invention et représentés en configuration découplée ;
- la figure 2 est une vue à plus grande échelle du détail II à la figure 1 ;
- la figure 3 est une vue à plus grande échelle du détail III à la figure 1 ;
- la figure 4 est une coupe analogue à la figure 1, lorsque les éléments mâle et femelle du raccord sont en début de phase d'accouplement ;
- la figure 5 est une vue à plus grande échelle du détail V à la figure 4 ;
- la figure 6 est une coupe analogue à la figure 1, lors d'une phase ultérieure de l'accouplement des éléments de raccord ;
- la figure 7 est une coupe analogue à la figure 1, lorsque les éléments de raccord sont accouplés ;
- la figure 8 est une coupe partielle à plus grande échelle selon la ligne VIII-VIII à la figure 7 ;
- la figure 9 est une coupe analogue à la figure 4 pour un raccord conforme à un deuxième mode de réalisation de l'invention, lequel est dans une configuration intermédiaire entre celle des figures 4 et 6 ;
- la figure 10 est une coupe partielle analogue à la figure 2 pour un élément de raccord conforme à un troisième mode de réalisation de l'invention ;
- la figure 11 est une coupe partielle analogue à la figure 2 pour un élément de raccord conforme à un quatrième mode de réalisation de l'invention ;
- la figure 12 est une vue partielle en perspective de l'élément de raccord représenté à la figure 11 ;
- la figure 13 est une coupe partielle correspondant approximativement à la figure 2 pour un élément de raccord conforme à un cinquième mode de réalisation de l'invention, en configuration découplée ;
- la figure 14 est une coupe partielle selon la ligne XIV-XIV à la figure 13 ;
- la figure 15 est une coupe partielle analogue à la figure 13, lorsque l'élément de raccord est en appui sur un élément de raccord complémentaire qui n'est pas représenté ;
- la figure 16 est une coupe partielle selon la ligne XVI-XVI à la figure 15 ;
- la figure 17 est une vue partielle en perspective de l'élément de raccord représenté aux figures 13 à 16 et
- la figure 18 est une coupe partielle analogue à la figure 2 pour un élément de raccord conforme à un sixième mode de réalisation de l'invention.

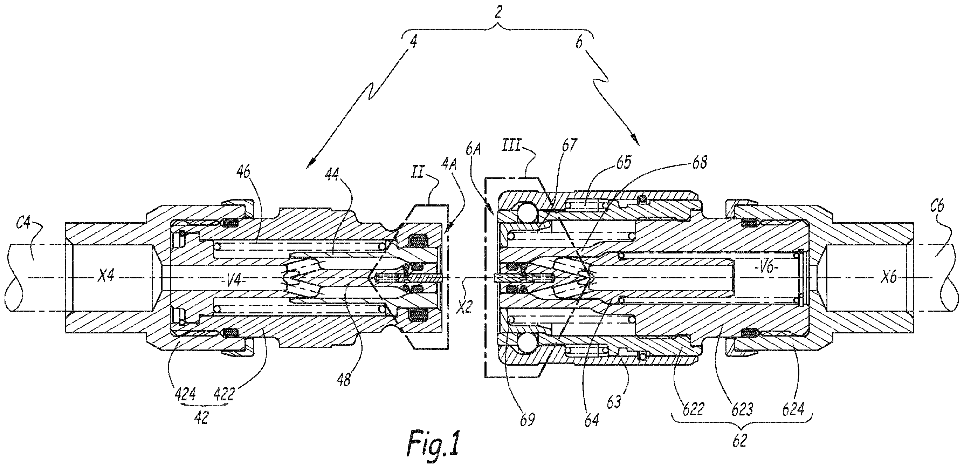

Le raccord 2 représenté aux figures 1 à 8 comprend un élément mâle 4 et un élément femelle 6 complémentaires, chacun alignés sur un axe longitudinal X4, respectivement X6.

En fonctionnement, les axes X4 et X6 sont alignés sur un axe commun X2 qui constitue l'axe longitudinal du raccord 2. En fonctionnement, les éléments 4 et 6 sont chacun raccordés à une canalisation de fluide sous pression C4, respectivement C6. Pour la clarté du dessin, ces canalisations C4 et C6 sont représentées en traits mixtes uniquement à la figure 1.

L'élément mâle 4 comprend un corps 42 qui définit l'axe X4 et qui est formé de deux parties 422 et 424 vissées l'une sur l'autre. A l'intérieur du corps 42 est disposé un clapet 44 qui est chargé élastiquement par un ressort 46 en direction de la face avant 4A de l'élément mâle 4.

La face avant d'un élément de raccord est la face de cet élément qui est tournée vers l'élément complémentaire lors de l'accouplement des éléments mâle et femelle du raccord. La face avant peut comprendre l'ensemble des faces avant des pièces tournées vers l'élément complémentaire qui sont contenues ou non dans le même plan. La face avant d'un raccord est opposée à la canalisation à l'extrémité de laquelle est monté le raccord. La face avant d'un raccord mâle ou femelle est donc prévue pour la coopération de l'élément de raccord avec un élément de raccord femelle ou mâle correspondant.

A l'intérieur du corps 42 est également disposé un poussoir 48, qui est fixe par rapport au corps 42 et entouré par le clapet 44. Le poussoir 48 forme donc une pièce interne pour l'élément de raccord mâle 6.

Le corps 42 définit une surface avant 42A, annulaire, perpendiculaire à l'axe X4 et qui appartient à la face avant 4A. De la même façon, le clapet 44 définit une surface avant 44A, annulaire, perpendiculaire à l'axe X4 et qui appartient à la face avant 4A, alors que le poussoir 48 définit une surface avant 48A annulaire, perpendiculaire à l'axe X4 et qui appartient à la face avant 4A. Les surfaces 42A, 44A et 48A sont concentriques, la surface 42A entourant les surfaces 44A et 48A, alors que la surface 44A entoure la surface 48A.

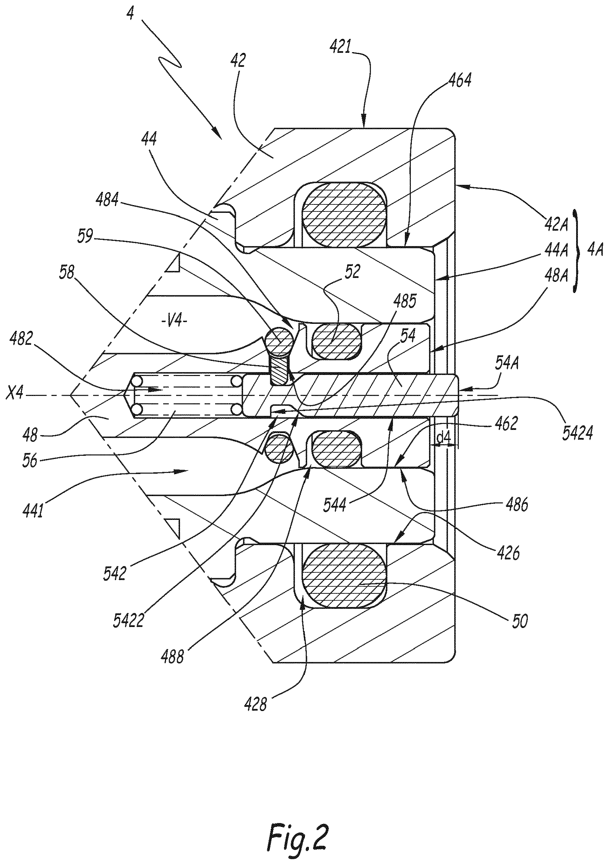

En configuration fermée de l'élément de raccord 4, représentée aux figures 1 et 2, le clapet 44 est en appui sur deux sièges formés respectivement par la surface radiale interne 426 du corps 42 et la surface radiale externe 486 du poussoir 48 située du côté de la face avant 4A de l'élément de raccord mâle 4. Les surfaces 426 et 486 sont chacune pourvues d'une gorge 428, respectivement 488, dans laquelle est disposé un joint torique 50, respectivement 52. En configuration fermée de l'élément de raccord 4, les joints toriques 50 et 52 sont respectivement en appui contre la surface radiale externe 462 et contre la surface radiale interne 464 du clapet 44. Ceci assure l'étanchéité à la fermeture de l'élément de raccord 4. Le volume interne V4 de l'élément de raccord 4 est alors isolé de l'extérieur.

Par ailleurs, un piston 54 est disposé dans un logement central 482 du poussoir 48, ce logement 482 étant aligné sur l'axe X4 et débouchant sur la surface avant 48A. On note la face avant 54A du piston 54 qui est disposée au centre de la face avant 4A. Le piston 54 est pourvu d'une gorge périphérique 542 à section asymétrique. Du côté de la face avant 4A, la gorge 542 est évasée et délimitée par une surface 5422 qui diverge de l'axe X4 en se rapprochant de la surface 48A. En d'autres termes, la surface 5422 est tronconique, centrée sur l'axe X4 et converge à l'opposé de la face avant 4A. A l'opposé de cette face avant 4A, la gorge 542 est délimitée par une surface 5424 qui est annulaire et perpendiculaire à l'axe X4.

Un ressort 56 est disposé entre le piston 54 et le fond du logement 482, en étant comprimé par le piston 54 qu'il repousse élastiquement en direction de la face avant 4A. Le logement 482 est un perçage borgne centré sur l'axe X4 et qui débouche au centre de la surface 48A. Le logement 482 constitue un premier logement ménagé dans le poussoir 48 et appartient à un passage de purge de l'élément de raccord mâle 4, défini ci-après..

Un pion 58 est engagé dans la gorge 542 et constitue un moyen d'arrêt qui s'oppose à l'éjection du piston 54 hors du logement 482 par le ressort 56.

Par ailleurs, le poussoir 48 est pourvu d'une gorge périphérique 484 dans laquelle est disposé un joint torique en élastomère 59, dont le diamètre est sélectionné pour qu'il repose par défaut contre le fond de la gorge 484. Un perçage 485 relie le fond de la gorge 484 et le logement 482. Le pion 58 est disposé dans ce perçage 485. En d'autres termes, le perçage 485 constitue un logement de réception du pion 58, lequel dépasse radialement vers l'axe X4 dans le logement 482. Ce perçage 485 constitue un deuxième logement ménagé dans le poussoir 48 et appartient également au passage de purge de l'élément de raccord mâle 4. Dans la configuration des figures 1 et 2, le joint 59 exerce un effort centripète sur le pion 58 et repose contre le fond de la gorge 484, de sorte qu'il s'oppose à l'écoulement de fluide sous pression vers l'extérieur de l'élément de raccord 4.

L'élément de raccord femelle 6 comprend un corps 62 qui est formé de trois parties 622, 623 et 624 vissées l'une sur l'autre, à savoir une partie avant 622, une partie intermédiaire 623 et une partie arrière 624. Un clapet 64 est monté mobile à l'intérieur du corps 62 en étant chargé vers la face avant 6A de l'élément 6 par un ressort 66. Le clapet 64 forme donc une pièce interne pour l'élément de raccord femelle 6. Un poussoir 68 entoure radialement le clapet 64 et sa surface radiale interne 686 définit un siège, du côté de la face avant 6A de l'élément de raccord femelle 6 destiné à coopérer avec le clapet 64. Dans l'exemple, le poussoir 68 est monobloc avec la partie intermédiaire 623 du corps 62. D'autres configurations sont envisageables.

Un obturateur auxiliaire 67 est installé radialement entre la partie avant 622 du corps 62 et le poussoir 68. Cet obturateur auxiliaire 67 est soumis à l'action d'un ressort 69 qui le pousse en direction de la face avant 6A de l'élément de raccord 6. Ceci permet de retenir en position, dans des orifices 625 du corps 62, une série de billes 61 qui servent au verrouillage des éléments 4 et 6 en configuration accouplée.

Par ailleurs, une bague 63 est montée mobile axialement autour du corps 62, en étant soumise à l'action d'un ressort de rappel 65 qui la pousse vers la face avant 6A. La bague 63 permet de commander le déplacement des billes 61, d'une façon connue en soi.

Les éléments 63, 62, 67, 68 et 64 sont chacun pourvus d'une surface annulaire 63A, 62A, 67A, 68A et 64A, perpendiculaire à l'axe X6 et qui définit une partie de la face avant 6A de l'élément de raccord 6.

Le clapet 64 est pourvu d'un logement ménagé sous la forme d'un perçage central borgne 642 centré sur l'axe X6 et qui débouche sur la surface 64A. Ce perçage constitue un premier logement aménagé dans le clapet 64 et appartient à un passage de purge de l'élément de raccord femelle, défini ci-après. Un piston 74 est monté coulissant dans ce logement 642 et soumis à un effort élastique exercé par un ressort 76. On note 74A la face avant du piston 74 qui est disposée au centre de la face avant 6A. Un pion 78 est engagé dans une gorge périphérique 742 du piston 74, laquelle est bordée par une surface tronconique 7422 évasée et qui diverge en direction de la face avant 6A et par une surface 7424 perpendiculaire à l'axe X6.

Le pion 78 traverse un perçage 645 qui débouche dans une gorge 644 ménagée autour du clapet 64 et dans laquelle est installé un joint torique 79. Le perçage 645 constitue un deuxième logement aménagé dans le clapet 64 et appartient également au passage de purge de l'élément de raccord femelle 6. Le joint 79 repose par défaut contre le fond de la gorge 644, de sorte qu'il s'oppose à l'écoulement de fluide sous pression vers l'extérieur de l'élément de raccord 6.

Dans un plan perpendiculaire à l'axe X4, respectivement à l'axe X6, les gorges 484 et 644 sont de forme circulaire.

Les pièces 74, 76, 78 et 79 sont respectivement identiques aux pièces 54, 56, 58 et 59. Ceci n'est toutefois pas obligatoire.

La surface périphérique externe 646 du clapet 64 est équipée d'une gorge 648 dans laquelle est disposé un joint torique 72 qui assure l'étanchéité de l'élément femelle de raccord 6 en configuration obturée, à l'interface entre le clapet 64 et le poussoir 68. Ceci isole le volume interne V6 de l'élément de raccord 6 par rapport à l'extérieur.

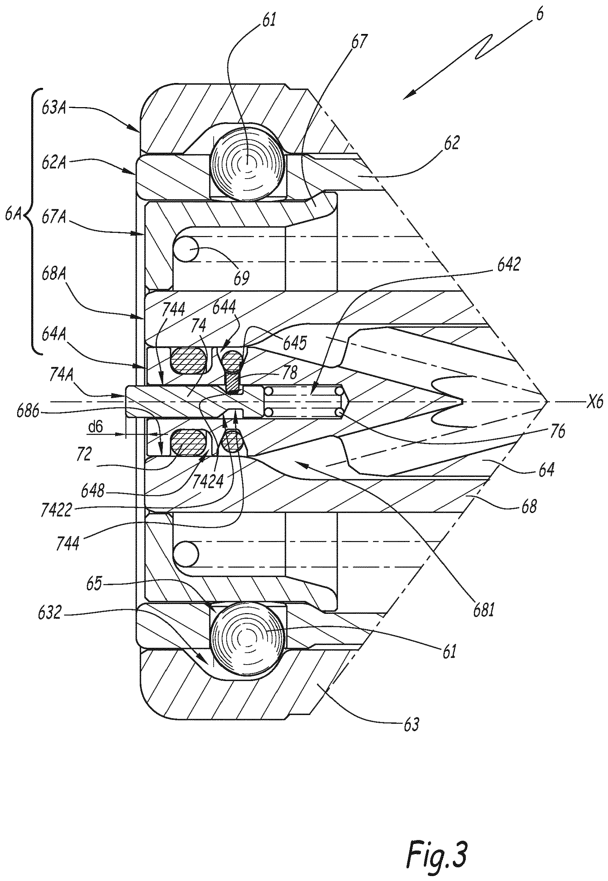

Dans la configuration des figures 1 et 3, les pistons 54 et 74 dépassent chacun de la face avant correspondante 4A ou 6A sur une distance axiale d4, respectivement d6, mesurée parallèlement à l'axe X4 ou X6 et qui est non nulle. Ainsi, les pistons 54 et 74 peuvent être actionnés par un opérateur, chacun à partir de la face avant 4A ou 6A de l'élément de raccord 4 ou 6 auquel ils appartiennent, en exerçant sur ceux-ci, à l'aide d'un outil commun ou de l'élément complémentaire respectivement 6 ou 4, un effort ayant au moins une composante axiale dirigée vers l'arrière de l'élément de raccord.

Dans l'exemple des figures, les distances d4 et d6 sont identiques. Ceci n'est pas obligatoire.

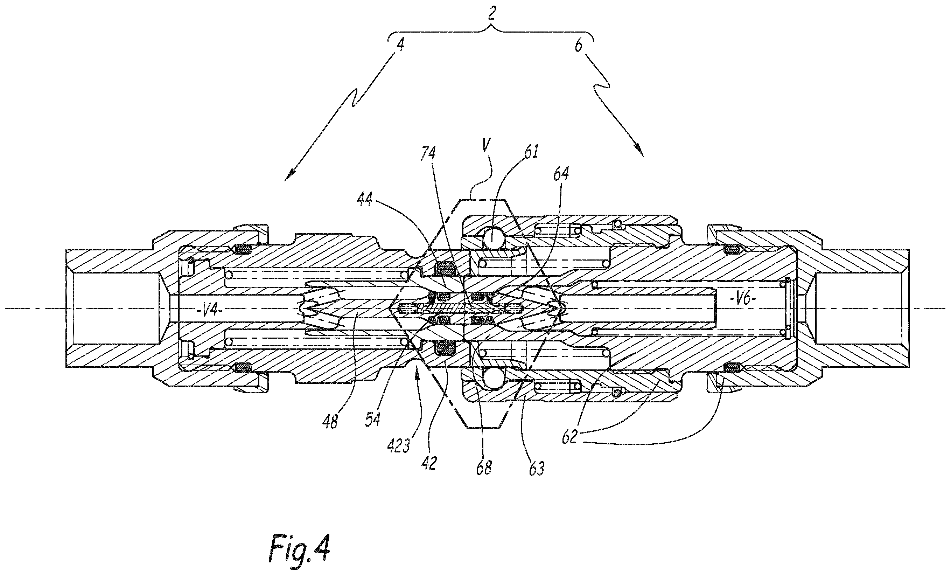

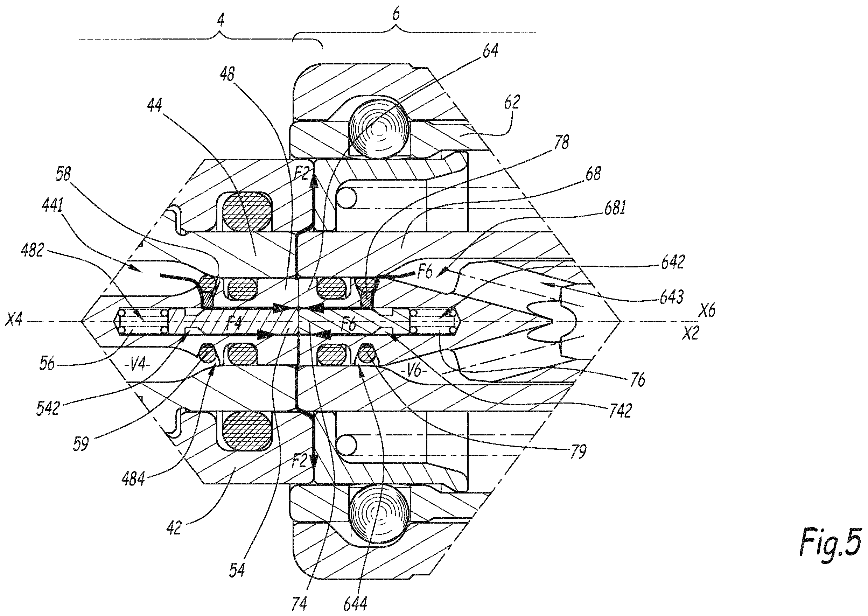

Lorsque les faces avant 4A et 6A des éléments mâle et femelle 4 et 6 sont amenées en contact l'une avec l'autre, comme représenté aux figures 4 et 5, les pistons 54 et 74 sont repoussés vers l'intérieur des logements 482 et 642, respectivement à l'encontre des efforts élastiques exercés par les ressorts 56 et 76, en direction du fond des logements 482 et 642. Ce mouvement de recul des pistons a pour effet de déplacer axialement les gorges 542 et 742 à l'opposé des faces avant 4A et 6A, c'est-à-dire vers le fond des logements 482 et 642, ce qui déplace les surfaces tronconiques 5422 et 7422 au contact des pions 58 et 78 qui sont alors repoussés radialement vers l'extérieur, c'est-à-dire en s'éloignant de l'axe X2, qui est alors confondu avec les axes X4 et X6. Les pions 58 et 78 sont ainsi éjectés des gorges 542 et 742 et viennent en appui, respectivement, contre les surfaces radiales externes 544 et 744 des pistons 54 et 74, entre ces gorges et les faces avant 54A et 74A des pistons 54 et 74. La position axiale des pions 58 et 78 par rapport aux faces avant 4A et 6A demeure inchangée au cours de leur déplacement radial centrifuge par rapport à l'axe X2.

Les surfaces 5422 et 7422 des pistons représentent chacune une surface de came le long de l'axe X4 et X6. L'action des surfaces de came 5422 et 7422 des pistons 54 et 74 sur les pions 58 et 78 provoque leur déplacement radial centrifuge par rapport à l'axe X2, ce qui produit une action directe sur le joint 59 ou 79. Ce déplacement centrifuge des pions 58 et 78 a pour effet de décoller les joints toriques 59 et 79 par rapport aux fonds des gorges 484 et 644.

Dans l'élément de raccord 4, ceci crée une fuite autour du pion 58, à travers le perçage 485. Plus précisément, du fluide sous pression qui se trouve dans le volume interne V4 de l'élément de raccord mâle 4, notamment entre le poussoir 48 et le clapet 44, peut s'écouler dans la gorge 484, dans le perçage 485 et, de là, dans le logement 482 autour du piston 54 et jusqu'à la face avant 4A, comme représenté par les flèches F4.

De la même façon, à l'intérieur de l'élément de raccord 6, du fluide présent dans le volume interne V6, notamment entre le clapet 64 et le poussoir 68, peut s'écouler dans la gorge 644, autour du pion 78 au sein du perçage 645 et, de là, à l'intérieur du logement 642 autour du pion 74 et jusqu'à la face avant 6A, comme représenté par les flèches F6.

Ces deux écoulements débouchent alors à l'interface entre les deux éléments de raccord 4 et 6, entre les faces avant 4A et 6A, d'où ils s'écoulent vers l'extérieur du raccord 2, comme représenté par les flèches F2.

En d'autres termes, un passage de purge est créé dans l'élément de raccord 4, par la réunion des volumes de la gorge 484, du perçage 485 et du logement 482. Ce passage de purge relie le volume interne V4 à la face avant 4A. Il est obturé par le joint 59 dans la configuration des figures 1 et 2. Dans la configuration des figures 4 et 5, il est ouvert par le pion 58 qui agit directement sur le joint 59 pour le décoller du fond de la gorge 484. Ici, l'adverbe « directement » signifie que le pion 58 est en contact avec le joint 59 et exerce un effort mécanique sur celui-ci sans interposition d'une pièce intermédiaire.

De la même façon, un passage de purge est créé dans l'élément femelle de raccord 6, par la réunion des volumes de la gorge 644 du perçage 645 et du logement 642. Ce passage de purge relie le volume interne V6 à la face avant 6A. Il est fermé par le joint 79 dans la configuration des figures 1 et 3. Il est ouvert grâce à l'action du pion 79 dans la configuration des figures 4 et 5. Là encore, le pion 78 agit directement sur le joint 79.

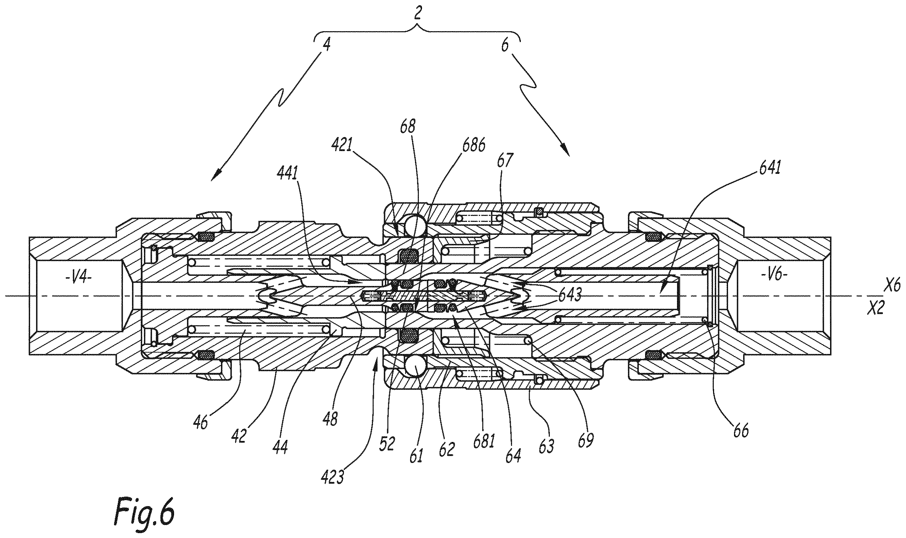

La poursuite de l'emmanchement des éléments mâle 4 et femelle 6 l'un dans l'autre permet d'atteindre la configuration de la figure 6, où le poussoir 48 a séparé le clapet 64 du siège formé par la surface radiale 686 interne du poussoir 68 en le repoussant à l'encontre de l'effort élastique exercé par le ressort 66, alors que le poussoir 68 a repoussé le clapet 44 à l'encontre de l'effort élastique exercé par le ressort 46. La communication fluidique entre les volumes internes respectifs V4 et V6 des éléments de raccord 4 et 6 n'est pas encore établie, dans la mesure où le joint torique 52 est en appui contre la surface radiale interne du poussoir 68. Dans cette configuration, le corps 42 a également repoussé l'obturateur auxiliaire 67 vers l'intérieur du corps 62, à l'encontre de l'effort élastique exercé par le ressort 69. Les billes 61 sont alors en appui contre la surface radiale externe 421 du corps 42.

Les billes 61 demeurent engagées dans une gorge radiale interne 632 de la bague 63, comme dans la configuration des figures 1 à 5.

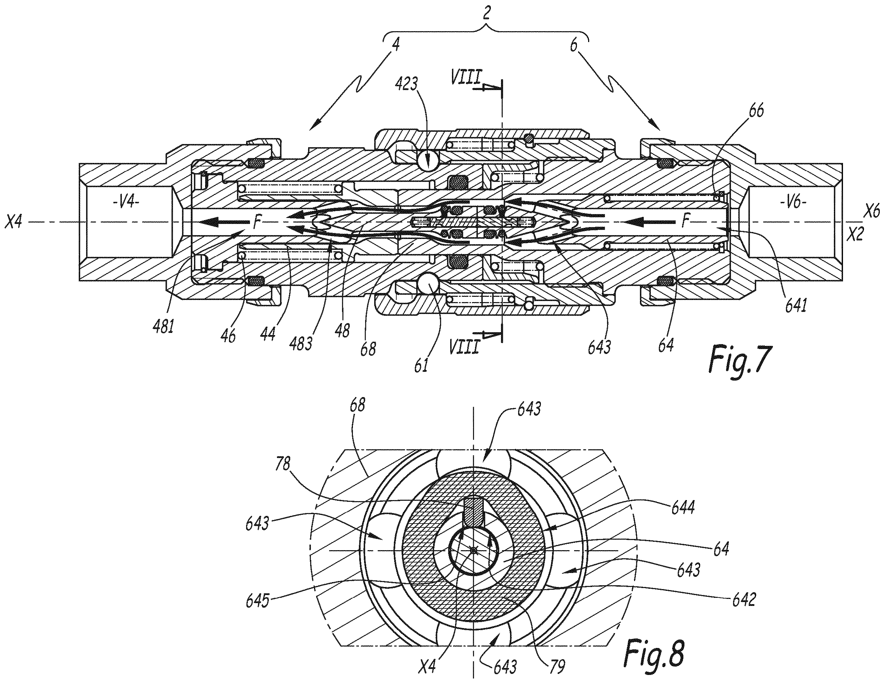

La poursuite du mouvement d'emmanchement permet d'atteindre la configuration accouplée des figures 7 et 8.

Dans cette configuration, la partie avant du poussoir 48, qui est équipée des gorges 484 et 488, a dépassé la partie avant du poussoir 68 qui a le diamètre intérieur le plus petit, de sorte que le joint torique 52 n'est plus en contact avec la surface radiale 686 interne du poussoir 68. Ceci a lieu en poussant encore le clapet 64 à l'encontre de l'effort élastique exercé par le ressort 66, d'une part, et en poussant le clapet 44 à l'encontre de l'effort élastique exercé par le ressort 46, d'autre part.

Ceci permet de créer une communication fluidique entre les volumes internes respectifs V4 et V6 des éléments 4 et 6 du raccord à travers la section de passage formée entre le poussoir 68 et le clapet 64, et à travers la section de passage formée entre le poussoir 48 et le clapet 44. Dans l'exemple des figures, on considère que l'élément de raccord femelle 6 est raccordé à une source de fluide sous pression alors que l'élément de raccord mâle 4 est raccordé à une charge qui consomme ce fluide, de sorte que l'écoulement de fluide sous pression a lieu de la droite vers la gauche à la figure 7, comme représenté par les flèches F. Ces flèches montrent que le volume interne de chaque élément de raccord 4 ou 6 définit un passage de fluide sous pression. Dans l'élément de raccord 4, le passage de fluide sous pression comprend un alésage central 481 du poussoir 48, des canaux 483 ménagés dans ce poussoir et qui sont divergeants en direction de la face 4A et un alésage central 441 du clapet 44. Dans l'élément de raccord 6, le passage de fluide sous pression comprend un alésage central 641 du clapet 64, des canaux 643 qui divergent en direction de la face avant 6A et un alésage central 681 du poussoir 68.

Dans la configuration des figures 7 et 8, les billes 61 sont engagées dans une gorge périphérique externe 423 du corps 42, ce qui verrouille ensemble les éléments de raccord 4 et 6.

Lors du passage de la configuration des figures 4 et 5 à celles des figures 6, puis 7 et 8, les pistons 54 et 74 demeurent immobiles dans les logements 482 et 642. Ainsi, les pions 58 et 78 demeurent éjectés des gorges périphériques 542 et 742 des piston 54 et 74, et maintiennent les joints 59 et 79 localement écartés des fonds des gorges 484 et 644. Les passages de purge demeurent donc ouverts. La figure 8 donc est représentative de la position du pion 78 et du joint 79 dans les configurations des figures 4 à 7.

Dans la configuration des figures 4 et 5, l'effort de pression exercé par le ressort 56 sur le piston 54 est de l'ordre de 1,5N, alors que l'effort appliqué par le pion 58 pour séparer le joint 59 du fond de la gorge 484 est de l'ordre de 7N. L'effort nécessaire à l'actionnement du mécanisme d'ouverture pour abaisser la pression résiduelle du raccord est donc très inférieur à l'effort d'emmanchement à exercer dans un raccord de l'art antérieur, qui est de l'ordre de 330N, comme mentionné ci-dessus.

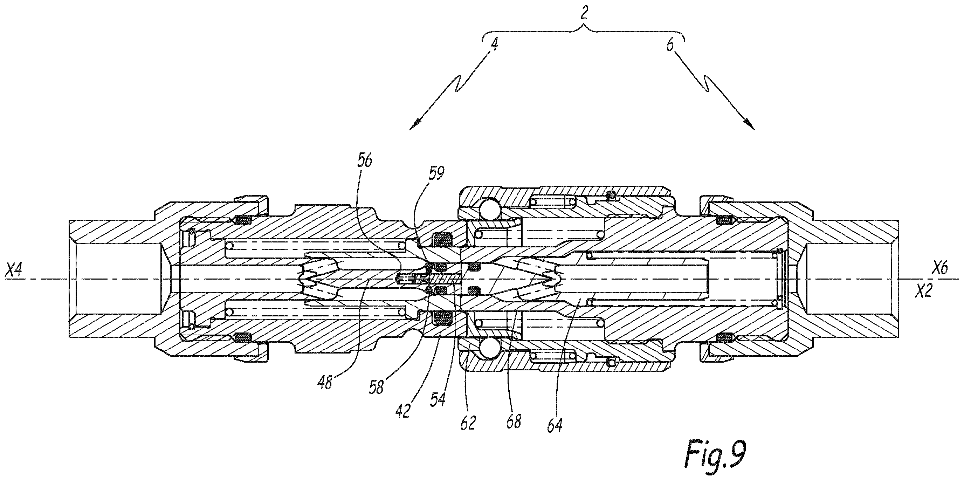

Dans les deuxième à sixième modes de réalisation représentés aux figures 9 et suivantes, les éléments analogues à ceux du premier mode de réalisation portent les mêmes références. Dans ce qui suit, on ne décrit que ce qui distingue ces autres modes de réalisation du premier.

Dans le deuxième mode de réalisation représenté à la figure 9, seul l'élément mâle de raccord 4 est équipé d'un mécanisme d'ouverture d'un passage de purge, qui comprend un piston 54, un ressort 56, un pion 58 et un joint 59. L'élément femelle 6 du raccord est un élément classique équipé d'un clapet central dont la face avant est alignée avec la face avant de l'élément femelle en position découplée du raccord, et apte à repousser le piston 54 de l'élément mâle 4 en phase d'accouplement.

Le raccord 2 de ce mode de réalisation est adapté au cas où l'élément femelle 6 du raccord est raccordé à une source de fluide sous pression, alors que l'élément mâle 4 est relié aux conduites internes d'un appareil dont la pression interne peut être amenée à augmenter en position découplée des éléments, et le clapet 44 contenir une pression interne assez importante pour gêner la manoeuvre de raccordement. Le fluide s'écoule de la droite vers la gauche à la figure 9.

L'invention est compatible avec différentes enveloppes et longueurs de piston 54 telles que, dans la position découplée du raccord, la face avant 54A du piston 54 peut être axialement en retrait par rapport à la face avant 4A de l'élément de raccord et que le piston n'émerge plus de la face avant 44A du clapet 44, alors que l'organe de commande est dans une position inactive. La face avant de l'élément femelle 6 complémentaire est alors adaptée pour présenter une forme saillante apte à repousser davantage le piston dans son logement central 482 en phase d'accouplement, afin de réaliser l'actionnement du mécanisme d'ouverture de l'élément mâle.

Selon une variante non représentée de l'invention, une configuration inverse est mise en oeuvre. En d'autres termes, l'élément femelle 6 est équipé d'un mécanisme d'ouverture d'un passage de purge constitué par un piston, un ressort, un pion et un joint, comme expliqué ci-dessus pour le premier mode de réalisation, alors que l'élément mâle en est dépourvu. Cette variante est adaptée au cas où seul l'élément mâle de raccord est alimenté en fluide sous pression lors du raccordement de ces éléments.

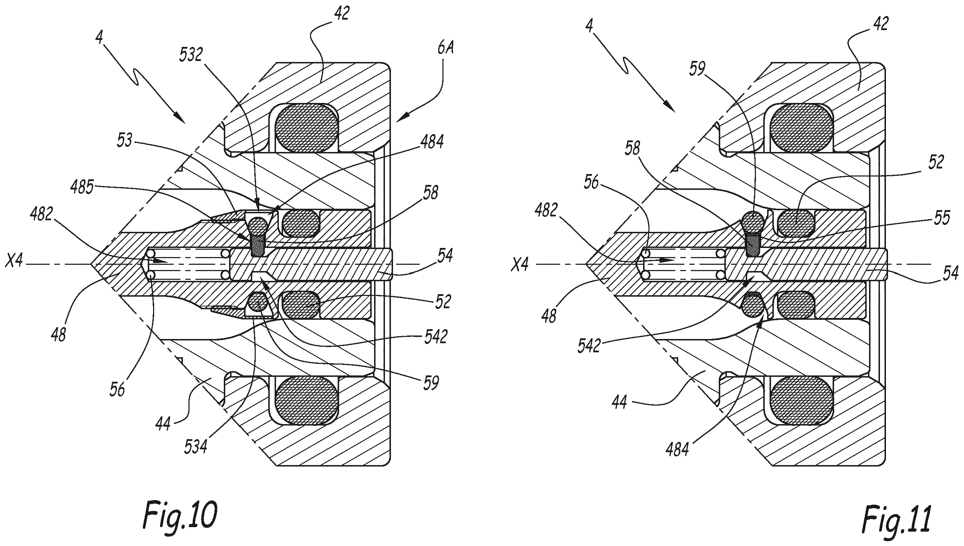

Dans le troisième mode de réalisation représenté à la figure 10, une cage 53 est rapportée sur le poussoir 48 pour éviter que le joint 59 ne sorte de la gorge 484 lorsqu'il est repoussé par le pion 58. Dans l'exemple, cette cage 53 est vissée sur le poussoir 48. En variante, elle peut être montée sur ce poussoir par d'autres moyens, notamment par collage ou encliquetage.

La cage 53 est pourvue de plusieurs lumières 532 réparties autour de l'axe X4, dont une est visible en partie haute de la figure 10, et qui permettent le passage de fluide vers la gorge 484. Ces lumières font donc partie du passage de purge. Entre les lumières 532, et comme visible en partie basse de la figure 10, un voile 534 de la bague 53 obture la gorge 484, ce qui maintient le joint 59 à l'intérieur de la gorge 484.

En variante, d'autres organes de retenue du joint 59 dans la gorge 484 peuvent être prévus, tels que des éléments de forme monoblocs avec le poussoir 48 .

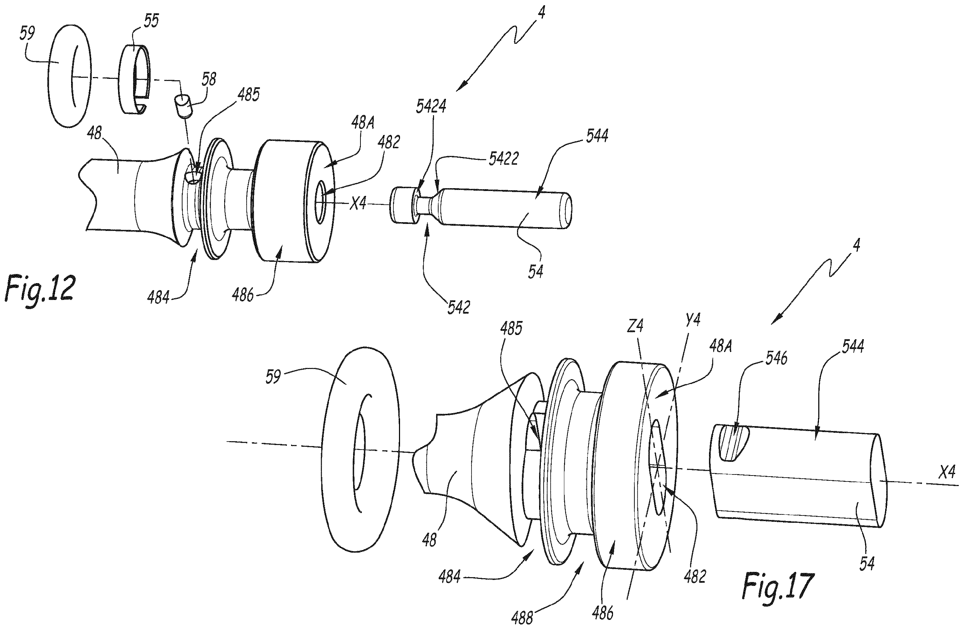

Dans le mode de réalisation des figures 11 et 12, un anneau fendu 55 est intercalé entre le pion 58 et le joint 59. Cet anneau fendu est plat, en ce sens qu'il a une section transversale, visible à la figure 11, qui est plus large selon une direction parallèle à l'axe X4 que selon une direction perpendiculaire à cet axe. L'anneau fendu 55 permet de répartir l'effort de poussée exercé par le pion 58 lorsqu'il est déplacé, radialement à l'axe X4, par le piston 54, sur une zone du joint 59 qui correspond à un secteur angulaire plus large que la seule zone d'interaction entre le pion 58 et le joint 59 dans les premier à troisième modes de réalisation. En outre, comme l'anneau fendu 55 fait le tour du poussoir 58 sur presque toute sa circonférence, au voisinage du fond de la gorge 484, il est déformé élastiquement lorsque le pion 58 est repoussé radialement vers l'extérieur par le piston 54. Comme l'anneau fendu 55 a tendance à reprendre sa forme initiale, il tend à repousser le pion 58 vers l'intérieur du perçage 485 et vers le logement 482. L'anneau fendu 55 apporte donc une fonction de rappel élastique du pion 58 vers sa configuration dans laquelle il ne repousse pas le joint 59 par rapport à sa position d'obturation par défaut dans laquelle ce joint 59 obture le passage de purge.

Dans ce mode de réalisation, l'anneau fendu 55 constitue un organe de commande qui agit directement sur le joint 59, cet organe de commande étant lui-même déplacé par le piston 54 et le pion 58 lorsqu'il est nécessaire d'ouvrir le passage de purge. Dans ce mode de réalisation, l'effort à exercer pour créer la fuite est plus important que dans les premier à troisième modes de réalisation car l'effort à exercer pour déformer l'anneau fendu se cumule à l'effort à exercer pour déplacer les pièces 54 et 58 et pour déformer le joint torique 59.

La figure 12 permet de visualiser certaines parties constitutives de l'élément de raccord de ce mode de réalisation. Pour la clarté du dessin, le joint 52 est omis sur cette figure. On remarque que, moyennant le retrait de l'anneau fendu 55, cette figure pourrait également concerner les premier et deuxième modes de réalisation.

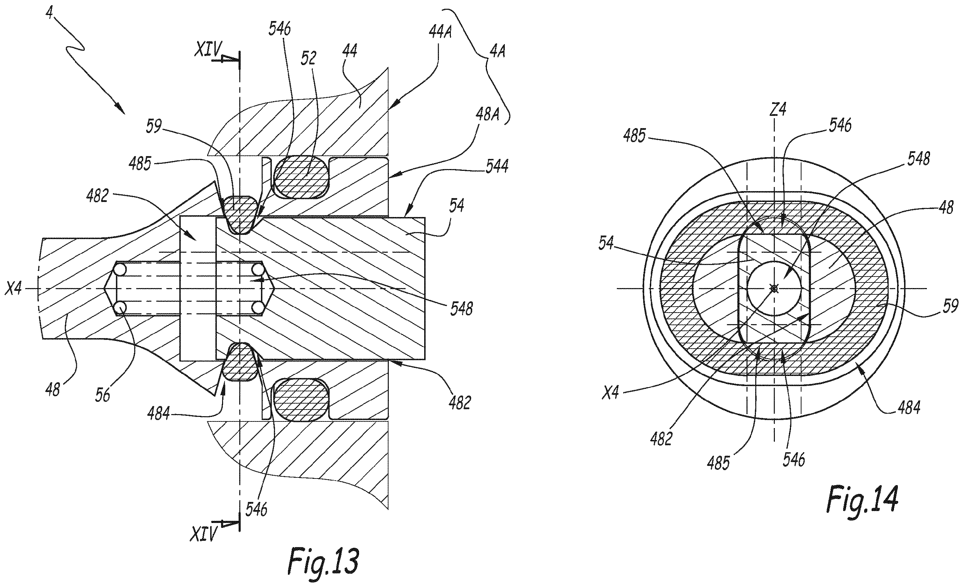

Dans le mode de réalisation des figures 13 à 17, le piston 54 agit directement sur le joint 59 qui est également reçu dans une gorge 484 du poussoir 48. Cette gorge est à section trapézoïdale.

On note respectivement Y4 et Z4 deux axes perpendiculaires à l'axe X4 et perpendiculaires entre eux.

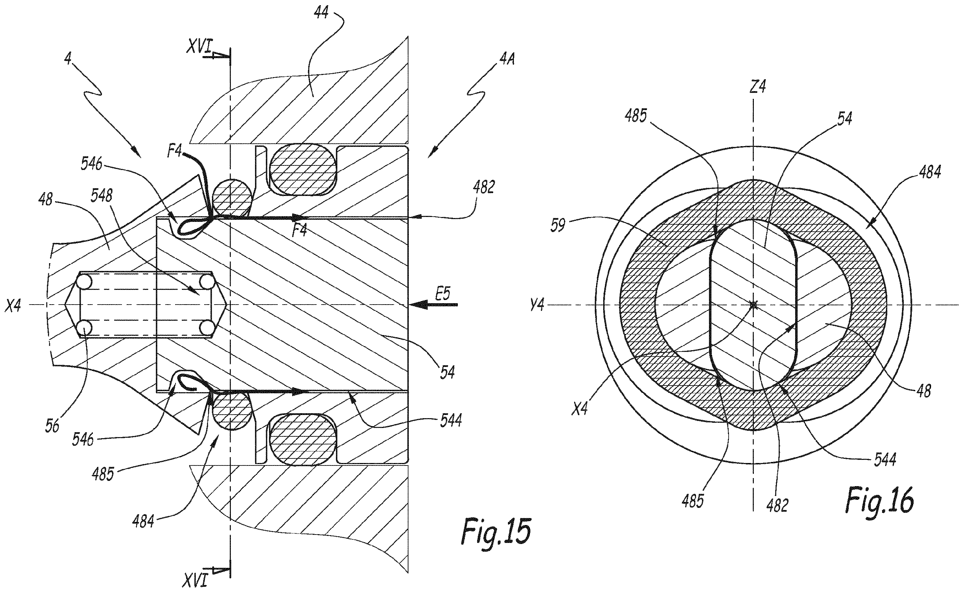

Comme visible à la figure 14, le fond de la gorge 484 présente une section allongée avec sa plus grande dimension transversale parallèle à l'axe Y4. Le joint 59 qui a une forme circulaire par défaut est déformé pour adopter la même forme que le fond de la gorge 484 dans le plan des figures 14 et 16. Au niveau de deux zones opposées qui sont alignées sur l'axe Z4, le fond de la gorge 484 est pourvu de deux perçages 485 qui mettent en communication la gorge 484 avec le premier logement 482.

Le logement 482 et le piston 54 présentent, quant à eux, une forme aplatie avec leurs plus grandes dimensions transversale parallèle à l'axe Z4.

Par ailleurs, le piston 54 est pourvu de deux encoches 546 qui forment chacune un espace de dégagement partiel du joint 59 dans sa position d'obturation par défaut, qui correspond à la configuration de la figure 1 pour le premier mode de réalisation et qui est représenté aux figures 13 et 14. Ainsi, dans ce mode de réalisation, l'organe de commande est le piston 54 qui agit directement sur le joint 59.

Le ressort 56 est engagé dans un trou borgne 548 du piston 54.

Dans la configuration par défaut d'obturation du passage de purge, l'engagement du joint 59 dans les encoches 546 a pour effet d'obturer les perçages 485, de sorte que le passage de purge, formé des volumes de la gorge 484, des perçages 485 et du logement 482, est fermé.

Lorsque le piston 54 est repoussé à l'encontre de l'effort élastique exercé par le ressort 56, par un effort représenté par la flèche E5 à la figure 15, en particulier lorsque la face avant 4A de l'élément de raccord est mise en appui contre la face avant d'un élément de raccord complémentaire, les encoches 546 du piston 54 sont décalées axialement par rapport à la gorge 484, ce qui a pour effet de repousser le joint 59 radialement vers l'extérieur par rapport à l'axe X4, en le poussant jusqu'autour de la surface radiale externe 544 du piston 54 et en créant, au niveau des passages 485, une fuite qui ouvre le passage de purge et qui permet au fluide contenu dans l'élément de raccord de s'écouler vers l'extérieur, comme représenté par les flèches F4 à la figure 15. La figure 16 montre que le joint 59 se décolle localement du fond de la gorge 484, ce qui facilite l'apparition de la fuite d'ouverture du passage de purge.

Dans ce mode de réalisation, l'engagement du joint 59 dans les encoches 546 contribue à retenir le piston 54 dans le logement 482.

En variante, les encoches 546 peuvent être remplacées par des zones où le piston 54 présente une dimension localement réduite le long de l'axe Z4, jusqu'au niveau de l'extrémité arrière du piston. En d'autres termes, il est formé deux épaulements en partie haute et basse du piston aux figures 13 à 16. Selon une autre variante, une zone de dimensions transversales réduites selon les axes Y4 et Z4 peut être prévue à proximité de l'extrémité arrière du piston 54. Dans les deux cas, le joint 59 peut se dégager partiellement dans cette ou ces zones lorsqu'il est en position d'obturation du passage de purge. Le joint ne bloque pas le piston contre l'action du ressort 56 et un organe d'arrêt complémentaire est prévu, notamment sous la forme d'une clavette insérée entre cuir et chair, entre le logement 482 et le piston 54.

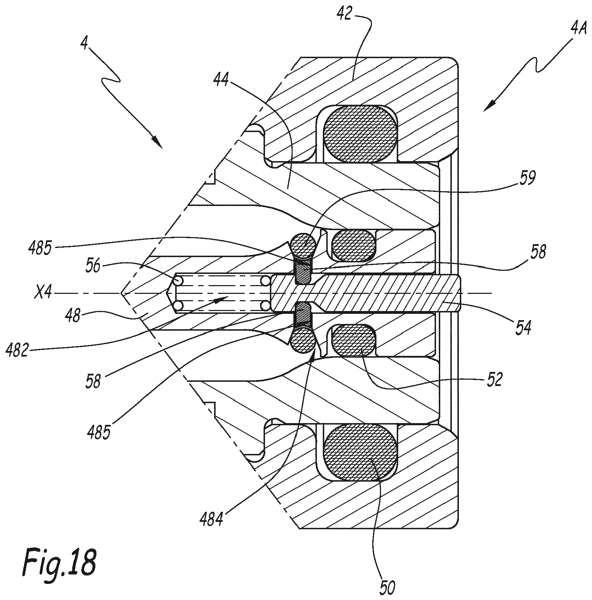

Dans le sixième mode de réalisation représenté à la figure 18, deux pions 58 sont utilisés pour commander le positionnement du joint 59 par rapport à la gorge 484. Deux perçages 485 sont prévus, ce qui permet de créer une fuite en deux endroits répartis autour de l'axe X4. Dans l'exemple de la figure 18, deux pions 58 sont utilisés. En variante, plus de deux pions 58 et plus de deux perçages 485 peuvent être utilisés, ceux-ci étant de préférence régulièrement répartis autour de l'axe X4. Dans ce mode de réalisation, l'effort nécessaire pour créer la fuite est plus important que dans le premier mode de réalisation, dans la mesure où le joint 58 doit être déformé en plusieurs points pour créer la fuite.

L'invention est décrite ci-dessus dans le cas où la gorge 484 est à section trapézoïdale ou semi-circulaire. Elle peut également être mise en oeuvre avec une gorge à section asymétrique.

Quel que soit le mode de réalisation, lors du désaccouplement des éléments mâle et femelle du raccord, le ressort 56, ou 76 repousse le piston 54 ou 74 vers la face avant 4A ou 6A, c'est-à-dire vers la position par défaut. Dans cette position, la gorge 542 ou 742 ou les encoches 546 du piston sont à nouveau alignés avec le joint 59 ou 79 qui peut reprendre sa position d'obturation par défaut où il obture le passage de purge. Dans cette position, les pistons 54 et/ou 74 sont à nouveau accessibles à un opérateur et prêts à être actionnés.

Dans les exemples des figures 1 à 12 et 18, les pions 58 et 78 se déplacent uniquement selon une direction radiale aux axes X4 ou X6. En variante, leur déplacement peut être oblique par rapport à ces axes, c'est-à-dire à la fois radial et axial.

L'invention est également applicable à un raccord co-axial dont les éléments mâle et femelle définissent deux passages de fluide sous pression, tel que celui connu de PCT/EP2015/078007. En particulier, les éléments 54, 58 et 59 de l'invention peuvent remplacer la bille de l'élément mâle de ce raccord connu.

Les joints 59 et 79 sont à section circulaire. En variante, cette section n'est pas circulaire.

Selon une autre variante, les pions 58 et/ou 78 peuvent être remplacés par des organes de commande présentant une autre géométrie, tels que des billes, des boutons, des loquets aptes à déformer et déplacer localement les joints 59 et/ou 79.

A la place du pion 58 ou 78 ou du joint 59, ou en complément, d'autres moyens de retenue du piston 54 ou 74 dans le logement 482 ou 642 peuvent être prévus, par exemple sous la forme d'une vis ou d'une clavette.

Le ressort 56 ou 76 peut être remplacé par un autre moyen de rappel élastique, par exemple une languette déformable.

Dans les modes de réalisation des figures 1 à 12 et 18, la gorge 542 ou 742 peut être remplacée par une surépaisseur localisée du piston 54 ou 74, à condition que le piston soit indexé angulairement autour de l'axe X4 ou X6 pour que cette surépaisseur soit alignée avec le ou les perçage(s) 485 ou 645. Dans ce cas, le passage de la surépaisseur au niveau du joint 59 ou 79 a pour effet de décoller le joint du fond de la gorge 484 ou 644 et d'ouvrir le perçage 485 ou 645.

Quel que soit le mode de réalisation ou la variante considéré, la structure compacte du mécanisme d'ouverture du passage de purge permet son implantation au sein d'un élément de raccord de diamètre relativement faible et une manoeuvre aisée lors de l'accouplement des éléments mâle et femelle du raccord rapide.

L'invention s'applique aux éléments de raccord et aux raccords pour fluide liquide ou gazeux.

## Revendications

1. Elément (4 ; 6) mâle ou femelle de raccord rapide (2) destiné à être raccordé à une canalisation (C4 ; C6) de fluide sous pression et comprenant
- un corps (42 ; 62) définissant au moins un passage (441, 481, 483 ; 641, 643, 681) de fluide sous pression, une face avant (4A ; 6A) et un axe longitudinal (X4 ; X6) de l'élément de raccord ;
- une pièce interne (48 ; 64) disposée dans le corps, qui est pourvue d'une surface (48A ; 64A) appartenant à la face avant, ainsi que d'un passage de purge (482, 484, 485 ; 642, 644, 645) reliant le passage de fluide sous pression et l'extérieur de l'élément de raccord ; et
- un mécanisme d'ouverture (54, 56, 58, 59 ; 74, 76, 78, 78) destiné à être actionné depuis la face avant de l'élément de raccord pour ouvrir le passage de purge,
**caractérisé en ce que** :
- la pièce interne (48 ; 64) est équipée d'une gorge périphérique (484 ; 644) dans laquelle repose un joint (59 ; 79) dans une position d'obturation dans laquelle il obture le passage de purge (482, 484, 485 ; 642, 644, 645) ;
- le mécanisme d'ouverture est monté sur la pièce interne et comprend au moins un organe (58 ; 78 ; 55 ; 54) de commande de la position du joint par rapport à la gorge, cet organe de commande étant mobile entre une première position inactive, où il ne déplace pas le joint par rapport à sa position d'obturation, et une deuxième position active, où il agit directement sur le joint pour ouvrir le passage de purge.

2. Elément mâle ou femelle de raccord rapide selon la revendication 1, **caractérisé en ce qu'**il comprend :
- un poussoir (48 ; 68), fixe par rapport au corps ;
- un clapet (44 ; 64) mobile par rapport au corps (42 ; 62) entre une position en appui contre un siège (486 ; 686) défini en partie par le poussoir et situé du côté de la face avant (4A, 6A) de l'élément mâle ou femelle de raccord (4, 6), où il obture le passage de fluide sous pression (441, 481, 483 ; 641, 643, 681), et une position écartée du siège, où il définit avec le siège une section de passage (F) de fluide sous pression ;
et **en ce que** la pièce interne équipée de la gorge périphérique (484 ; 644) et du joint (59 ; 79) est formée par le clapet (64) ou par le poussoir (48).

3. Elément mâle ou femelle de raccord rapide selon l'une des revendications précédentes, **caractérisé en ce que** l'organe de commande (58 ; 78 ; 55) est actionné, en passant de sa première position inactive à sa deuxième position active, par un piston (54 ; 74) disposé dans un premier logement (482 ; 642) de la pièce interne (48, 64), mobile dans ce logement parallèlement à l'axe longitudinal (X4, X6) et destiné à être lui-même actionné à partir de la face avant (4A, 6A).

4. Elément mâle ou femelle de raccord rapide selon la revendication 3, **caractérisé en ce que** l'organe de commande est un pion (58 ; 78) disposé dans un deuxième logement (485, 645) de la pièce interne (48 ; 64) et mobile radialement par rapport à l'axe longitudinal (X4, X6), entre sa première position inactive et sa deuxième position active, sous l'action d'une surface de came (5422, 6422) du piston (54, 74).

5. Elément mâle ou femelle de raccord rapide selon l'une des revendications précédentes, **caractérisé en ce que** l'organe de commande est un anneau fendu (55) disposé entre le joint (59) et le fond de la gorge (484) de la pièce interne (48).

6. Elément mâle ou femelle de raccord rapide selon les revendications 3 et 5, **caractérisé en ce que** l'anneau fendu (55) est mobile, entre sa première position inactive et sa deuxième position active, sous l'action d'au moins un pion (58) disposé dans un deuxième logement (485) de la pièce interne (48) et lui-même mobile radialement par rapport à l'axe longitudinal (X4), entre une première position inactive et une deuxième position active, sous l'action d'une surface de came (5422) du piston (54).

7. Elément mâle ou femelle de raccord rapide selon l'une des revendications 1 ou 2, **caractérisé en ce que** l'organe de commande est un piston (54) disposé dans un premier logement (482) de la pièce interne (48), mobile dans ce logement et destiné à être lui-même actionné à partir de la face avant (4A).

8. Elément mâle ou femelle de raccord rapide selon la revendication 7, **caractérisé en ce que** le piston (54) est mobile parallèlement à l'axe longitudinal (X4) et définit au moins un espace (546) de dégagement partiel du joint, dans la position inactive du piston.

9. Elément mâle ou femelle de raccord rapide selon l'une des revendications 3, 4, 6, 7 ou 8, **caractérisé en ce qu'**il comprend des moyens (56 ; 76 ; 55) de charge élastique du piston (54 ; 74) vers une position où celui-ci n'actionne pas l'organe de commande (58 ; 78 ; 55 ; 54) et où il peut être actionné à partir de la face avant (4A, 6A).

10. Elément mâle ou femelle de raccord rapide selon l'une des revendications 3 à 9, **caractérisé en ce que** le passage de purge (482, 484, 485 ; 642, 644, 645) comprend au moins le premier logement (482 ; 642) de la pièce interne (48, 64).

11. Elément mâle ou femelle de raccord rapide selon l'une des revendications précédentes, **caractérisé en ce que** la gorge périphérique (484 ; 644) est à section trapézoïdale, semi-circulaire ou asymétrique.

12. Elément mâle ou femelle de raccord rapide selon l'une des revendications précédentes, **caractérisé en ce qu'**il comprend un organe de retenue du joint (59) dans la gorge périphérique (484), notamment une bague (53) solidaire de la pièce interne (48).

13. Elément mâle ou femelle de raccord rapide selon l'une des revendications précédentes, **caractérisé en ce que** le passage de purge (482, 484, 485 ; 642, 644, 645) débouche sur la face avant (4A ; 6A) de l'élément de raccord.

14. Elément mâle ou femelle de raccord rapide selon l'une des revendications précédentes, **caractérisé en ce que** l'organe de commande (58 ; 78 ; 55 ; 54) est mobile dans le passage de purge (482, 484, 485 ; 642, 644, 645).

15. Raccord rapide (2) pour la jonction amovible de canalisations (C2, C4) de fluide sous pression, ce raccord comprenant un élément mâle (4) et un élément femelle (6), **caractérisé en ce que** l'un au moins des éléments mâle et femelle (4, 6) est selon l'une des revendications précédentes.

## Patentansprüche

1. Einsteck- oder Aufnahmeelement (4; 6) einer Schnellkupplung (2), das vorgesehen ist, an eine Leitung (C4; C6) für unter Druck stehendes Fluid angeschlossen zu werden und umfasst
- einen Körper (42; 62), der mindestens einen Durchgang (441, 481, 483; 641, 643, 681) für ein unter Druck stehendes Fluid, eine Vorderfläche (4A; 6A) und eine Längsachse (X4; X6) des Kupplungselements definiert;
- ein Innenteil (48; 64), das in dem Körper angeordnet ist und das mit einer zu der Vorderfläche gehörenden Fläche (48A; 64A) sowie mit einem Entlüftungskanal (482, 484, 485; 642, 644, 645), der den Durchgang für das unter Druck stehende Fluid mit dem Außenraum des Kupplungselements verbindet, versehen ist; und
- einen Öffnungsmechanismus (54, 56, 58, 59; 74, 76, 78, 78), der vorgesehen ist, von der Vorderfläche des Kupplungselements betätigt zu werden, um den Entlüftungskanal zu öffnen,
**dadurch gekennzeichnet, dass**:
- das Innenteil (48; 64) mit einer Umfangsnut (484; 644) ausgerüstet ist, in der eine Dichtung (59; 79) in einer Verschlussstellung ruht, in der sie den Entlüftungskanal (482, 484, 485; 642, 644, 645) verschließt;
- der Öffnungsmechanismus an dem Innenteil montiert ist und mindestens ein Element (58; 78; 55; 54) zur Steuerung der Position der Dichtung in Bezug auf die Nut umfasst, wobei dieses Steuerelement zwischen einer ersten inaktiven Position, in der es nicht die Dichtung in Bezug auf seine Verschlussstellung verschiebt, und einer zweiten aktiven Position, in der es direkt auf die Dichtung wirkt, um den Entlüftungskanal zu öffnen, beweglich ist.

2. Einsteck- oder Aufnahmeelement einer Schnellkupplung nach Anspruch 1, **dadurch gekennzeichnet, dass** es umfasst:
- einen Stößel (48; 68), der in Bezug auf den Körper feststehend ist;
- ein Ventilelement (44; 64), das in Bezug auf den Körper (42; 62) zwischen einer Position der Anlage gegen einen Sitz (486; 686), der teilweise durch den Stößel festgelegt wird und an der Seite der Vorderfläche (4A, 6A) des Einsteck- oder Aufnahmeelements (4, 6) der Kupplung liegt, in der es den Durchgang (441, 481, 483; 641, 643, 681) des unter Druck stehenden Fluids verschließt, und einer von dem Sitz abgehobenen Position, in der es mit dem Sitz einen Durchgangquerschnitt (F) für das unter Druck stehende Fluids definiert, beweglich ist;
und dass das mit der Umfangsnut (484; 644) und der Dichtung (59; 79) ausgerüstete Innenteil von dem Ventilelement (64) oder dem Stößel (48) gebildet ist.

3. Einsteck- oder Aufnahmeelement einer Schnellkupplung nach einem der vorhergehenden Ansprüche, **dadurch gekennzeichnet, dass** das Steuerelement (58; 78; 55) von einem Kolben (54; 74), der in einer ersten Aufnahme (482; 642) des Innenteils (48, 64) angeordnet ist, betätigt wird, wobei es von seiner ersten inaktiven Position in seine zweite aktive Position übergeht, wobei der Kolben in dieser Aufnahme parallel zur Längsachse (X4, X6) beweglich ist und vorgesehen ist, selbst von der Vorderfläche (4A, 6A) her betätigt zu werden.

4. Einsteck- oder Aufnahmeelement einer Schnellkupplung nach Anspruch 3, **dadurch gekennzeichnet, dass** das Steuerelement ein Stift (58; 78) ist, der in einer zweiten Aufnahme (485, 645) des Innenteils (48; 64) angeordnet ist und radial in Bezug auf die Längsachse (X4, X6) zwischen seiner ersten inaktiven Position und seiner aktiven Position mittels einer Nockenfläche (5422, 6422) des Kolbens (54, 74) beweglich ist.

5. Einsteck- oder Aufnahmeelement einer Schnellkupplung nach einem der vorhergehenden Ansprüche, **dadurch gekennzeichnet, dass** das Steuerelement ein geschlitzter Ring (55) ist, der zwischen der Dichtung (59) und dem Grund der Nut (484) des Innenteils (48) angeordnet ist.

6. Einsteck- oder Aufnahmeelement einer Schnellkupplung nach den Ansprüchen 3 und 5, **dadurch gekennzeichnet, dass** der geschlitzte Ring (55) zwischen seiner ersten inaktiven Position und seiner zweiten aktiven Position durch mindestens einen Stift (58) beweglich ist, der in einer zweiten Aufnahme (485) des Innenteils (48) angeordnet ist und selbst radial in Bezug auf die Längsachse (X4) zwischen einer ersten inaktiven Position und einer zweiten aktiven Position mit Hilfe einer Nockenfläche (5422) des Kolbens (54) beweglich ist.

7. Einsteck- oder Aufnahmeelement einer Schnellkupplung nach einem der Ansprüche 1 oder 2, **dadurch gekennzeichnet, dass** das Steuerelement ein Kolben (54) ist, der in einer ersten Aufnahme (482) des Innenteils (48) angeordnet ist, in dieser Aufnahme beweglich ist und vorgesehen ist, selbst von der Vorderfläche (4A) her betätigt zu werden.

8. Einsteck- oder Aufnahmeelement einer Schnellkupplung nach Anspruch 7, **dadurch gekennzeichnet, dass** der Kolben (54) parallel zur Längsachse (X4) beweglich ist und mindestens einen Raum (546) zur teilweisen Freigabe der Dichtung in der inaktiven Position des Kolbens definiert.

9. Einsteck- oder Aufnahmeelement einer Schnellkupplung nach einem der Ansprüche 3, 4, 6, 7 oder 8, **dadurch gekennzeichnet, dass** es Mittel (56; 76; 55) zur elastischen Vorspannung des Kolbens (54; 74) in eine Position, in der dieser nicht das Steuerelement (58; 78; 55; 54) betätigt und in der er von der Vorderfläche (4A, 6A) her betätigt werden kann, umfasst.

10. Einsteck- oder Aufnahmeelement einer Schnellkupplung nach einem der Ansprüche 3 bis 9, **dadurch gekennzeichnet, dass** der Entlüftungskanal (482, 484, 485; 642, 644, 645) mindestens die erste Aufnahme (482; 642) des Innenteils (48, 64) umfasst.

11. Einsteck- oder Aufnahmeelement einer Schnellkupplung nach einem der vorhergehenden Ansprüche, **dadurch gekennzeichnet, dass** die Umfangsnut (484; 644) einen trapezförmigen, halbkreisförmigen oder asymmetrischen Querschnitt aufweist.

12. Einsteck- oder Aufnahmeelement einer Schnellkupplung nach einem der vorhergehenden Ansprüche, **dadurch gekennzeichnet, dass** es ein Element zum Zurückhalten der Dichtung (59) in der Umfangsnut (484), insbesondere einen mit dem Innenteil (48) verbundenen Ring (53) umfasst.

13. Einsteck- oder Aufnahmeelement einer Schnellkupplung nach einem der vorhergehenden Ansprüche, **dadurch gekennzeichnet, dass** der Entlüftungskanal (482, 484, 485; 642, 644, 645) an der Vorderfläche (4A, 6A) des Kupplungselements mündet.

14. Einsteck- oder Aufnahmeelement einer Schnellkupplung nach einem der vorhergehenden Ansprüche, **dadurch gekennzeichnet, dass** das Steuerelement (58; 78; 55; 54) in dem Entlüftungskanal (482, 484, 485; 642, 644, 645) beweglich ist.

15. Schnellkupplung (2) für die lösbare Verbindung von Leitungen (C2, C4) für ein unter Druck stehendes Fluid, wobei diese Kupplung ein Einsteckelement (4) und ein Aufnahmeelement (6) umfasst, **dadurch gekennzeichnet, dass** das Einsteckelement (4) und/oder das Aufnahmeelement (6) nach einem der vorhergehenden Ansprüche ausgebildet ist.

## Claims

1. A male or female quick coupling (2) element (4; 6) intended to be coupled to a pressurized fluid pipe (C4; C6) and comprising:
- a body (42; 62) defining at least one pressurized fluid passage (441, 481, 483; 641, 643, 681), a front face (4A; 6A) and a longitudinal axis (X4; X6) of the coupling element;
- an inner part (48, 64) arranged in the body, which is provided with a surface (48A; 64A) belonging to the front face, as well as a drain passage (482, 484, 485; 642, 644, 645) coupling the pressurized fluid passage and the outside of the coupling element; and
- an opening mechanism (54, 56, 58, 59; 74, 76, 78, 78) intended to be actuated from the front face of the coupling element to open the drain passage,
**characterized in that**:
- the inner part (48; 64) is provided with a peripheral groove (484; 644) in which a seal (59; 79) rests that, in a closing off portion, closes off the drain passage (482, 484, 485; 642, 644, 645);
- the opening mechanism is mounted on the inner part and comprises at least one member (58; 78; 55; 54) for controlling the position of the seal relative to the groove, this control member being movable between a first inactive position, where it does not move the seal relative to its closing off position, and a second active position, where it acts directly on the seal to open the drain passage.

2. The male of female quick coupling element according to claim 1, **characterized in that** it comprises:
- a plunger (48; 68) that is stationary relative to the body;
- a flap (44; 64) that is movable relative to the body (42; 62) between a position bearing against a seat (486; 686) defined in part by the plunger and situated on the side of the front face (4A, 6A) of the male or female coupling element (4, 6), where it closes off the pressurized fluid passage (441, 481, 483; 641, 643, 681), and a position separated from the seat, where together with the seat, it defines a pressurized fluid passage section (F);
and **in that** the inner part equipped with the peripheral groove (484; 644) and the seal (59; 79) is formed either by the flap (64) or by the plunger (48).

3. The male or female quick coupling element according to one of the preceding claims, **characterized in that** the control member (58; 78; 55) is actuated, going from its first inactive position to its second active position, by a piston (54; 74) arranged in a first housing (482; 642) of the inner part (48, 64), movable in this housing parallel to the longitudinal axis (X4, X6) and intended itself to be actuated from the front face (4A, 6A).

4. The male or female quick coupling element according to claim 3, **characterized in that** the control member is a pin (58; 78) arranged in a second housing (485, 645) of the inner part (48; 64) and radially movable relative to the longitudinal axis (X4, X6), between its first inactive position and its second active position, under the action of a cam surface (5422, 6422) of the piston (54, 74).

5. The male or female quick coupling element according to one of the preceding claims, **characterized in that** the control member is a slotted ring (55) arranged between the seal (59) and the bottom of the groove (484) of the inner part (48).

6. The male or female quick coupling element according to claims 3 and 5, **characterized in that** the slotted ring (55) is movable, between its first inactive position and its second active position, under the action of at least one pin (58) arranged in a second housing (485) of the inner part (48) and which itself is radially movable relative to the longitudinal axis (X4), between a first inactive position and a second active position, under the action of a cam surface (5422) of the piston (54).

7. The male or female quick coupling element according to one of claims 1 or 2, **characterized in that** the control member is a piston (54) arranged in a first housing (482) of the inner part (48), movable in this housing and intended itself to be actuated from the front face (4A).

8. The male or female quick coupling element according to claim 7, **characterized in that** the piston (54) is movable parallel to the longitudinal axis (X4) and defines at least one partial release space (546) of the seal, in the inactive position of the piston.

9. The male or female quick coupling element according to one of claims 3, 4, 6, 7 or 8, **characterized in that** it comprises means (56; 76; 55) for elastically stressing the piston (54; 74) toward a position where the latter does not actuate the control member (58; 78; 55; 54) and where it can be actuated from the front face (4A, 6A).

10. The male or female quick coupling element according to one of claims 3 to 9, **characterized in that** the drain passage (482, 484, 485; 642, 644, 645) comprises at least the first housing (482; 642) of the inner part (48, 64).

11. The male or female quick coupling element according to one of the preceding claims, **characterized in that** the peripheral groove (484; 644) has a trapezoidal, semicircular or asymmetrical section.

12. The male or female quick coupling element according to one of the preceding claims, **characterized in that** it comprises a member for retaining the seal (59) in the peripheral groove (484), in particular a ring (53) secured to the inner part (48).

13. The male or female quick coupling element according to one of the preceding claims, **characterized in that** the drain passage (482, 484, 485; 642, 644, 645) emerges on the front face (4A; 6A) of the coupling element.

14. The male or female quick coupling element according to one of the preceding claims, **characterized in that** the control member (58; 78; 55; 54) is movable in the drain passage (482, 484, 485; 642, 644, 645).

15. A quick coupler (2) for removably joining pressurized fluid pipes (C2, C4), this coupler comprising a male element (4) and a female element (6), **characterized in that** at least one of the male and female elements (4, 6) is according to one of the preceding claims.
